Europäisches Patentamt

European Patent Office

Office européen des brevets

(11) Publication number: **0 549 790 A1**

# EUROPEAN PATENT APPLICATION
## published in accordance with Art. 158(3) EPC

㉑ Application number: **91905911.3**

㉒ Date of filing: **21.12.90**

㊻ International application number:
**PCT/SU90/00280**

㊼ International publication number:
**WO 91/14887 (03.10.91 91/23)**

㊿ Int. Cl.⁵: **F16H 25/20**

---

㉚ Priority: **05.03.90 SU 4798576**
**29.05.90 SU 4832155**

㊸ Date of publication of application:
**07.07.93 Bulletin 93/27**

㊺ Designated Contracting States:
**AT DE FR GB GR IT SE**

㉛ Applicant: **VASILIEV, Gennady Vladimirovich**
**ul. 40 let Oktyabrya, 24-30**
**Barnoul, 656023(SU)**
Applicant: **MUZALEVESKAYA, Galina**
**Dmitrievna**
**ul. Guschina, 219-452**

**Barnoul, 656060(SU)**

㉜ Inventor: **VASILIEV, Gennady Vladimirovich**
**ul. 40 let Oktyabrya, 24-30**
**Barnoul, 656023(SU)**
Inventor: **MUZALEVESKAYA, Galina**
**Dmitrievna**
**ul. Guschina, 219-452**
**Barnoul, 656060(SU)**

㊄ Representative: **Ebbinghaus, Dieter et al**
**Patentanwälte v. Füner, Ebbinghaus, Finck**
**Mariahilfplatz 2 & 3**
**W-8000 München 90 (DE)**

---

㊄ **METHOD AND DEVICE FOR CONVERSION OF RECIPROCATING MOTION INTO UNIDIRECTIONAL ROTARY MOTION.**

㊄ Conversion is carried out by means of a screw-type mechanism which is based on highly effective screw transmissions by rolling and whose driving link (1) is connected, with the possibility of its own free axial and rotary movement, to an axial force receiving unit (2) and interacts with the latter through arresting or sliding surfaces (12, 13). Under the influence of one axial force the driving link (1) is held so as to prevent its rotation and simultaneously is moved by the travel distance, the translation movement of the driving link (1) being converted into the rotary motion of a driven link (3). The release and compulsary return of the link (1) to its initial position is effected by means of an oppositely directed force, whereby the link moves with a screw motion in relation to the rotating driven link (3), the value of the force being chosen so that the reactive inertia mo- ment of the link (1) is less than the static and dynamic inertia moment at the driven link (3). The method allows continuous unidirectional rotary motion to be obtained with the possibility of inertial rotation of the driven link (3), a bolt or a nut, the freewheeling being obtained automatically. The possibility of stepless control of the torque, the speed of rotation and reversing means that use of the device is not restricted only to vehicles.

EP 0 549 790 A1

FIG.1

FIG.2

FIG.9

2

## Industrial Field

The present invention relates to the technique of imparting rotary motion to an object and has specific reference to a method of transforming reciprocating motion into unidirectional rotary motion and an apparatus embodying same.

## Prior Art

Widely known is a method of transforming reciprocating motion into unidirectional rotary motion which is implemented by means of a screw pair of a mechanism referred to as "whirligig".

Pursuant to this method, a screw - which is a drive link of the screw pair - is constrained in an original position so as to prevent it from revolving and is then displaced axially downwards through the distance of a run. Thus, the translatory motion of the screw is transformed into a rotary motion of a driven link - a nut - which, being constrained in relation to a housing against the action of this axial motive force, imparts rotary motion to the housing. The drive link is then returned into the original position, being displaced with respect to the driven link by an axial motive force of an opposite direction, whereby the driven link revolves downwards along the thread due to gravity. The cycle is repeated after the drive link is back in its original position until the driven link and the housing acquire a rotary motion with specified parameters. The drive link is then set free.

The prior-art method lends itself to implementation only when the following prerequisites exist.

1. The axis of the screw pair should be vertical, for the relative displacement of the driven link is gravity-induced.

Another point is that the driven link revolves in different directions at the stage of transforming the translatory motion into the rotary one and during the downward travel due to gravity. The driven link, i.e. the nut, has a low mass so that the moment of inertia of its rotary motion in contact with the housing is consequently also low, producing no negative effect on the rotary motion of the housing due to inertia. However, when the driven member is of a large mass, this negative effect greatly influences the inertial motion.

2. The speed, V, of the drive link depends on the speed, gt, of the driven link during its downward travel along the screw which is influenced by the free fall acceleration, g. This means that the speed of the drive link during the return into the original position must be kept within certain limits. When V < gt, the driven link impedes the inertia-induced motion of the housing. When V > gt, the driven link is short of time for lowering to the housing during the period of displacement of the drive link into its topmost position. As a result, no transformation of the motion of the drive link takes place at an early stage of the downward travel thereof.

A failure to take into account the above conditions makes the prior-art method futile.

Also known is an apparatus for transforming a continuous rotary motion into a reciprocating one (US, A, 3,803,926) incorporating a turnbuckle with two nuts, one with a right-hand thread and the other with a left-hand one, which are rigidly coupled to one another by a tubular member, supported by bearings in a housing and linked to an electric motor. The nuts interact with screws the outward ends whereof are supported in bearings fitted to cheek pieces and are provided with brakes fitted each to the appropriate cheek piece. The cheek pieces are held fast to each other by tierods which are free to displace in relation to the housing along guides so as to form a movable frame.

The known apparatus is also fit to transform a reciprocating motion into a rotary one. To that end, reciprocally opposing axial forces are applied to the movable frame, while braking alternately the relevant screws. A first screw, acting as a drive member, imparts rotary motion to the nut while a second screw - its brake being released by the axial force - screws out of the appropriate nut, performing its idle movement. When the opposite axial force acts on the frame, the second screw is being braked - whereas the brake of the first screw is released - so that imparting rotary motion to the nut will be the second screw.

This way of transformation takes effect only if the brakes of the screws operate in step with the axial forces acting thereupon due to means of their control. This means and the need in braking complicate the design of the apparatus. The means of control is also indispensable, for it provides for the rotary motion of the driven link, the nut, due to inertia.

It must be also pointed out that the prior-art apparatus cannot control the direction of the axial motive force at any time and in any position of the drive link within the confines of the travel thereof.

Further known is an apparatus embodying the method of transforming reciprocating motion into unidirectional rotary motion referred to hereinabove which incorporates a housing contained wherein, without provision for self-braking, is a vertical screw pair. The drive link thereof, a screw, is fitted with a hand grip used to apply an axial motive force. The driven link, a light-weight nut, fits the screw with provision for interacting with the housing.

When the screw is being displaced downwards, the translatory motion thereof is transformed into a rotary motion of the nut, said motion being transmitted to the housing. At this stage, which is the working motion, the friction torque set up between the housing and the nut exceeds the torque between the screw and the nut which is not influenced by the braking effect therebetween because this does not exist.

When the screw is being displaced upwards into the original position, this is the idle motion, the nut revolves downwards along the screw - integrally therewith at an early instant and due to gravity eventually - in an opposite direction with respect to the housing until contract therewith is established, being thus returned into the original position for further interaction with the screw.

An optimum speed of the screw on its upward travel during the idle motion is one which is roughly equal the speed of the nut during its descent. If the speed of the assending screw is less than the speed of the descending nut, the nut hampers the rotary motion of the housing. If the speed of the ascending screw is greater than the speed of the descending nut, this fails to reach the surface of contact with the housing to that the screw remains idle during some length of the downward travel. Therefore, the speed of the screw during the idle motion is defined by the speed whereat the nut descends down the screw.

Thus, the vertical reciprocating motion of the screw is transformed into unidirectional motion of the housing on account of the nut interacting with the screw. The performance of the apparatus depends on the frequency of the reciprocating motions.

The known apparatus can operate in the upright position only, because the return travel of the nut down the screw is induced by gravity.

Summary of the Invention

The principal object of the invention is to provide a method of transforming reciprocating motion into unidirectional rotary motion pursuant whereto a drive link is positively returned into an original position for a subsequent transformation of motion without producing a considerable effect on the rotary motion of a driven link irrespectively of the spatial position of screw mechanism and also to provide an apparatus realizing this method wherein the drive link is coupled to an axial force-imposing unit so as to bring about a continuous unidirectional rotary motion of the driven link under an action of the axial forces, continue the rotary motion of the driven link automatically through the agency of inertia after the axial forces have ceased to exert their action and create conditions for saving power during return travel of the drive link into the original position at any alowable speed.

This object is realized by disclosing a method of transforming reciprocating motion into unidirectional rotary motion which relies for operation on a screw mechanism devoid of self-braking ability and consists of constraining rotary motion of a drive link of the screw mechanism in an original position, displecing the drive link along the axis of the screw mechanism through the distance of a run so as to transform the translatory motion thereof into a rotary motion of a driven link, returning the drive link into the original position by displacing it in relation to the driven link, repeating the cycle until the rotary motion acquires specified parameters and releasing the drive link, whereby according to the invention the drive link is simultaneously constrained and displaced by the same axial force and is then simultaneously released and positively returned into the original position, while being imparted a helical motion in relation to the revolving driven link, by a force opposing the axial one and chosen so that the reactive moment of inertia of the drive link is less than the static and dynamic moments of inertia of the driven link when the drive link is revolving about the revolving driven link, coupled to an inertial mass, at a speed exceeding that of the rotary motion of the driven link.

The simultaneous restraint and displacement by the same axial force permits the transformation to take effect practically from the instant of applying the axial force to the drive link. The simultaneous releasing and positive returning of the drive link by the opposing force permits the transformation to take effect irrespectively of the spatial position of the screw mechanism and at a speed not affected by the free fall acceleration.

The object of the invention is realized by disclosing a method of transforming reciprocating motion into unidirectional rotary motion which relies for operation on a screw mechanism devoid of self-braking ability and consists of constraining rotary motion of the drive link of the screw mechanism in an original position, displacing the drive link along the axis of the screw mechanism through the distance of a run so as to transform the translatory motion thereof into a rotary motion of the driven link, returning the drive link into the original position by displacing it in relation to the driven link, repeating the cycle until the rotary motion acquires specified parameters and releasing the drive link, whereby according to the invention the main drive link is alternately constrained and displeced simultaneously with releasing and returning into an original position an additional drive link, which is imparted a helical motion in relation to the revolving driven link, due to the action of an axial force and the main drive link is released and positively returned into the original position, while being imparted a helical motion in relation to the revolving driven link, due to the action of another axial force of reversed direction, whereby both drive links displace along the same driven link.

The object of the invention is also realized by disclosing a method of transforming reciprocating motion into unidirectional rotary motion which relies for operation on a screw mechanism devoid of self-braking ability and consists of constraining rotary motion of the drive link of the screw mechanism in an original position, displacing the drive link along the axis of the screw mechanism through the distance of a run so as to transform the translatory motion thereof into a rotary motion of the driven link, returning the drive link into the original position by displacing it in relation to the driven link, repeating the cycle until the rotary motion acquires specified parameters and releasing the drive link, whereby according to the invention the mein drive link is alternately constrained and displaced by two axial forces and simultaneously the additional drive link is released and positively returned into the original position, while being imparted helical motion in relation to the revolving driven link, and the main drive link is released and positively returned into the original position, while being imparted helical motion in relation to the revolving driven link, simultaneously with constraining and displacing the additional drive link, whereby both drive links displace along the same driven link.

This arrangement provides for obtaining continuous unidirectional rotary motion of the driven link.

The axial forces can be of the same magnitude and their directions can be the same or different. They can also differ both in magnitude and direction. Such practice is conducive to using different drives in implementing the disclosed method.

It is practical to change the magnitude of axial force in a predetermined manner so as to exercise stepless control of the torque and rotary speed of the driven link.

The object of the invention is further realized by disclosing an apparatus for transforming reciprocating motion into unidirectional rotary motion provided in the form of a screw mechanism which is contained in a housing, is devoid of self-braking ability and comprising a drive link with an axial force-imposing unit and a driven link fetted with provision for revolving about its axis wherein according to the invention the drive link is coupled to the drive-actuated axial force-imposing unit with provision for unobstructed axial displacement, unobstructed revolving and constraining so as to interact therewith by way of two surfaces a constraining surface and a sliding surface, with corresponding identical surfaces of the axial force-imposing unit, and the driven link is coupled to the housing and an inertial mass.

The way in which the drive link is coupled to the axial force-imposing unit and the sliding surface are the factors which not only enable the drive link to return into the original position along the revolving driven link irrespectively of the spatial position of the screw mechanism but impart rotary motion to the driven link independently of the revolving housing so that the driven link can be employed as an actuating means in a machine or mechanism. The mode in which the driven link is coupled to the housing and the inertial mass provides for an inertia-induced motion of this link.

The object of the invention is realized by disclosing apparatus for transforming reciprocating motion into unidirectional rotary motion provided in the form of a screw mechanism which is contained in a housing, is devoid of self-braking ability and consists of a drive link with an axial force-imposing unit and a driven link fitted with provision for revolving about its axis wherein according to the invention there is incorporated at least one additional drive link with a self-contained axial force-imposing unit, whreby the axial force-imposing units of the drive links ore connected to a drive owing whereto the drive links diverge along the driven link with a unidirectional full-length thread and each drive link is coupled to its axial force-imposing unit with provision for unobstructed axial displacement, unobstructed revolving and constraining so as to interact therewith by way of its two surfaces, a constraining surface and a sliding surface, contacting corresponding identical surfaces of the axial force-imposing unit.

The two axial force-imposing units, each whereof is actuated by a self-contained drive, and the two drive links with the only unidirectionally threaded driven link are arranged so that the two drive links operating in conjunction with one driven link are acted upon by two oppositely directed axial forces with the result that the driven link receives a continuous unidrectional rotary motion.

The object of the invention is also realized by disclosing an apparatus for transforming reciprocating motion into unidirectional rotary motion provided in the form of a screw mechanism which is contained in a housing, is devoid of self-braking ability and consists of a drive link with an axial force-imposing unit and a driven link fitted with provision for revolving about its axis wherein according to the invention there is incorporated at least one additional drive link with a self-contained axial force-imposing unit held fast to the axial force-imposing unit of the main drive link, whereby the driven link is provided with at least two lengths of threads of opposite directions enabling the drive links to travel in the same direction, and each drive link is coupled to its axial force-imposing unit with provision for unobstructed axial displacement, unobstructed revolving and constraining so as to interact therewith by way of its two surfaces, a constraining surface and a sliding surface, contacting corresponding identical surfaces of the axial force-imposing unit.

Owing to the fact that the two axial force-imposing units are held fast to the two drive links and the driven link is provided with threads of different directions, the driven link is imparted a continuous unidirectional rotary motion when the same axial force is simultaneously applied to both drive links operating in conjunction with the driven link.

It is expedient that bearings functioning as the sliding surfaces of the axial force-imposing units are incorporated into each thereof to couple the axial force-imposing unit to the drive link which serves as a race of each bearing the grooves whereof are axially oriented.

In this case the drive link is free to displace axially and revolve in relation to the axial force-imposing unit due to the action of both the axial forces and the force exerted by the revolving driven link. The bearings incorporated into each axial force-imposing unit enable its housing to displace axially with provision for altering the position around the axis as this may appear to be necessary in order to produce a high torque at an early stage of the motion of the driven link. The fact that a race of each bearing is functioning as the drive link minimizes the static moment of inertia thereof.

It is also expedient that the apparatus incorporates a reversing means coupled to the bearings of the axial force-imposing units, whereby held fast to each drive link there is a member provided with at least two mutually opposing constraining surfaces and at least two mutually opposing sliding surfaces which interact with corresponding surfaces of the axial force-imposing unit.

This design feature provides for altering the direction of the rotary motion of the driven link.

It is further expedient that the constraining surfaces have a high friction.

This ensures a smooth braking of the drive link after it has made an unobstructed helical motion along the revolving driven link.

It is preferred that the axial force-imposing units are held fast to a fixed member, and the driven link is provided with an additional axial force-imposing unit facilitating an unobstructed revolving thereof.

This design feature effects return helical motion with unidirectional rotation of the driven link.

It is also preferred that the apparatus is provided with an axial force-controlling means which is coupled either to the axial force-imposing units of the drive links or to the additional axial force-imposing unit.

This arrangement can control the performance of the apparatus by a stepless control of the torque and speed of the revolving driven link - a feature which is desirable when the apparatus finds appication on vehicles.

It is further preferred that the axial force-controlling means is provided in the form of an articulated leverage with a gradually changing ratio of arms.

It is practical to provide the axial force-controlling means in the form of a controllable linear actuator.

It is also practical to provide the axial force-controlling means in the form of an articulated leverage with a gradually changing ratio of arms which is coupled to the movable member of a linear actuator.

The various forms of the axial force-controlling means provide for using the disclosed apparatus with various drives.

Brief Description of the Drawings

The disclosed invention will now be described by way of example with reference to the accompanying drawings, wherein:

Figure 1 is a schematic representation of the way in which motion is being transformed according to the invention at the stages of constraining and displacing the drive link which is a nut;

Figure 2 is a schematic representation of the way in which motion is being transformed according to the invention at the stages of releasing and returning the drive link which is a nut;

Figure 3 is a schematic representation of the way in which motion is being transformed according to the invention at the stages of constraining and displacing the drive link which is a screw;

Figure 4 is a schematic representation of the way in which motion is being transformed according to the invention at the stages of releasing and returning the drive link which is a screw;

Figure 5 is a schematic representation of the way in which motion is being transformed so as to impart continuous rotary motion to the driven link according to the invention when the drive links are acted upon by diverging axial forces;

Figure 6 is a schematic representation of the way in which motion is being transformed so as to impart continuous rotary motion to the driven link according to the invention when the drive links are acted upon by converging axial forces;

Figure 7 is a schematic representation of the way in which motion is being transformed so as to impart continuous rotary motion to the driven link according to the invention when the drive links are acted upon by a single axial force of a given direction;

Figure 8 is a schematic representation of the way in which motion is being transformed so as to impart continuous rotary motion to the driven link according to the invention when the drive links are acted upon by a single axial force of reversed direction;

Figure 9 is a sectional elevation of the apparatus for transforming reciprocating motion into unidirectional inertia-induced motion according to the invention;

Figure 10 illustrates the position of the axial force-imposing unit when the drive link is being returned into the original position;

Figure 11 is a sectional elevation of the apparatus for transforming reciprocating motion into continuous unidirectional inertia-induced motion of the driven link provided with a full-length unidirectional thread according to the invention;

Figure 12 is a sectional elevation of the apparatus for transforming reciprocating motion into continuous unidirectional inertia-induced motion of the driven link provided with two lengths of threads of different directions according to the invention;

Figure 13 is a sectional elevation of the apparatus for transforming reciprocating motion into continuous unidirectional inertia-induced motion of the driven link which is provided with a reversing means according to the invention;

Figure 14 illustrates the position of the drive links after the reversing means has been engaged during their rightward travel;

Figure 15 illustrates the position of the drive links during an idle motion of the driven link;

Figure 16 is a sectional elevation of the apparatus for transforming reciprocating motion into helical motion with unidirectional revolving of the driven link according to the invention;

Figure 17 illustrates a development of the axial force-controlling means according to the invention;

Figure 18 illustrates another development of the axial force-controlling means according to the invention;

Figure 19 illustrates a third development of the axial force-controlling means according to the invention.

## Embodiment

The disclosed method of transforming reciprocating motion into unidirectional rotary motion is materialized with the aid of a screw mechanism with rolling or sliding contact devoid of self-braking ability.

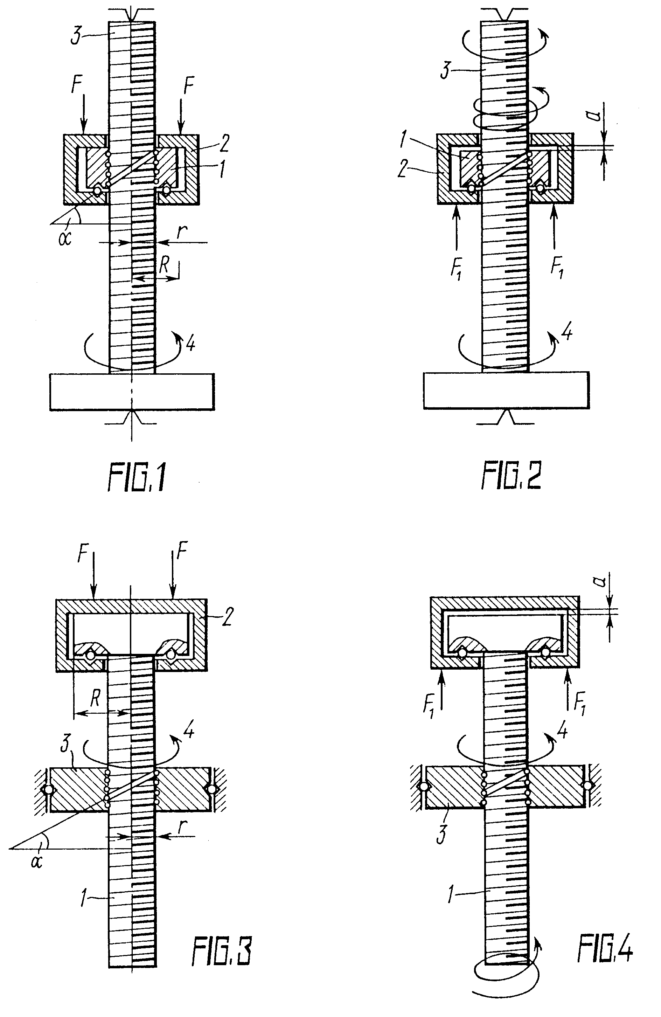

Referring to Figs 1 and 3, a drive link 1 is constrained against rotary motion by an axial force F exerted by an axial force-imposing unit 2 at an instant when a friction torque $M_1$ is greater than a torque $M_2$. At the same time, the same force F imparts translatory motion to the drive link 1 which is transformed into rotary motion of a driven link 3 in a direction indicated by an arrow 4. The transformation takes effect only when $M_1 > M_2$. To that end, the following inequality must hold:

$$Rf > r\tan \alpha$$

where

$\alpha$ = helix angle;

f = friction coefficient existing between the drive link 1 and the axial force-imposing unit;

R = radius of the surface in relation whereto the constraining takes place;

r = major radius of the thread.

The above inequality commonly holds for the following values:

$$f \approx 0{,}25\text{-}0{,}15; \; \alpha \approx 17\text{-}15\,°; \; R \approx 1{,}1r \text{ to } 2r.$$

For the given values of the helix angle $\alpha$, the efficiency of a rolling-contact screw pair is 0,8-0,95; the load-carrying capacity of the pair is also high. For sliding surfaces, $f \approx 0{,}005\text{-}0{,}002$.

Owing to a low friction coefficient the force required for returning the drive link 1 into the original position is determined practically only by the static moment of inertia of the drive link 1.

To return the drive link 1 into the original position (Figs 2 and 4) for a subsequent transformation of the motion thereof, the drive link 1 is released by applying a force $F_1$ of a reverse direction with respect to the axial force F and, at the same time, the drive link 1 is displaced into its original position due to the action of the force $F_1$ and revolved with out hindrance. This means, that during an interaction of sliding surfaces the friction torque $M_1$ is less than the torque $M_2$.

In realizing the disclosed method, the moment of inertia of the driven link 3 should be greater than the moment of inertia of the drive link 1. As a result, the direction of the rotary motion of the driven link 3 does not change when the drive link 1 is returned into the original position, ie when this link is in a state of helical motion.

The drive link 1 can be returned into the original position also by being revolved in the same direction as the driven link 3 but at a speed which exceeds that of the driven link 3. The drive link 1 will not return into the original position when its speed is less than or equals that of the driven link 3.

The drive link 1 can return into the original position due to a combined effect of the axial force F and the torque $M_2$. The cycle is then repeated until the driven link 3 is revolving at a specified speed and with a specified torque.

When the drive link 1 is in the state of translatory motion, the axial force-imposing unit 2 is stopped in any position without being disengaged from the drive. Receiving some energy from the revolving driven link 3, the drive link 1 shifts from the constraining surface to the sliding surface and starts revolving unidirectionally with the driven link 3, practically without influencing the rotary motion thereof. Thus, the drive link 1 is released automatically as soon as the axial forces F and $F_1$ cease to have effect. The transmission of energy from the driven link 3 to the drive link 1, which starts when the translatory motion of the drive link 1 is stopped, goes on until both links revolve at the same speed.

A point to be noted is that the drive link 1 may posses a significant energy of rotary motion on completing the helical motion about the driven link 3. This energy will be transmitted to the driven link 3, starting from the instant when the translatory motion is ended and ending when the two links 1 and 3 revolve at the same speed.

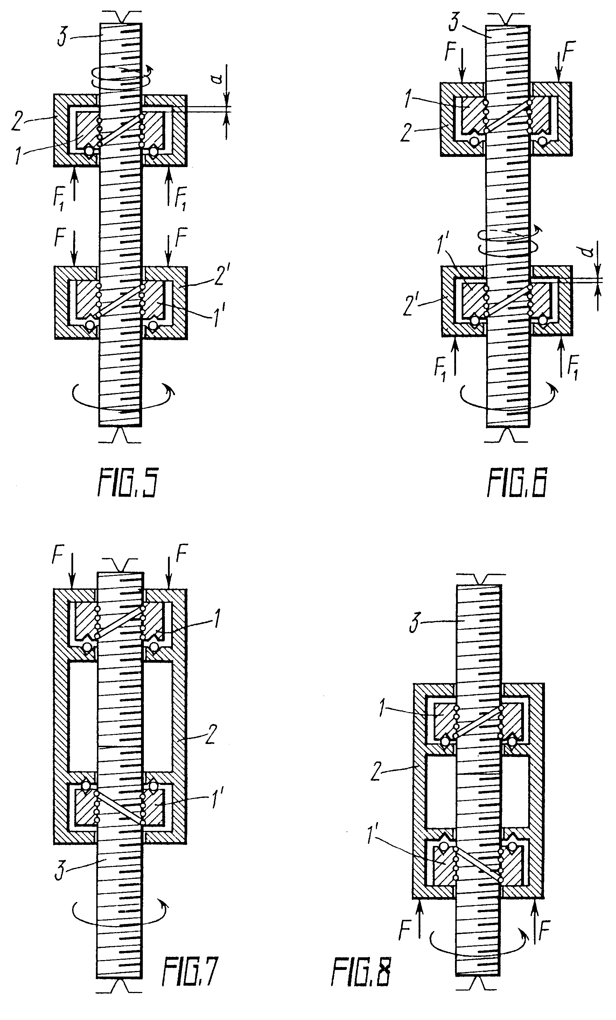

To impress continuous unidirectional rotary motion on the driven link 3 (Fig. 5) with a unidirectional thread, the diverging axial forces F and $F_1$ of the same magnitude are applied to both drive links 1 and 1' at a time. Alternatively, the drive links 1 and 1' can be acted upon by the forces of different magnitudes.

The forces F and $F_1$ are applied to the drive links 1 and 1' simultaneously by way of the axial force-imposing units 2 and 2', respectively. The drive link 1 is acted upon through the sliding surface with the result that this link is released and given an upward helical motion about the driven link 3 so as to reach the original position. The drive link 1' is acted upon through the constraining surface with the result that this link is constrained and displaced downwards at the same time so as to transform the translatory motion of the drive link 1' into rotary motion of the driven link 3. The directions of the forces F and $F_1$ (Fig. 6) are reversed. The axial force $F_1$ returning the drive link 1 or 1' into the original position can be by far smaller than the force $F_1$ for the static moment of inertia of the returned drive link 1 or 1' is small. The drive link 1 imparts then rotary motion to the driven link 3 while the drive link 1' returns into its original position.

Thus, the driven link 3 is imparted a continuous rotary motion with given parameters. The use of axial forces F and $F_1$ of different directions and magnitudes creates the prospect of utilizing the disclosed method with various drives.

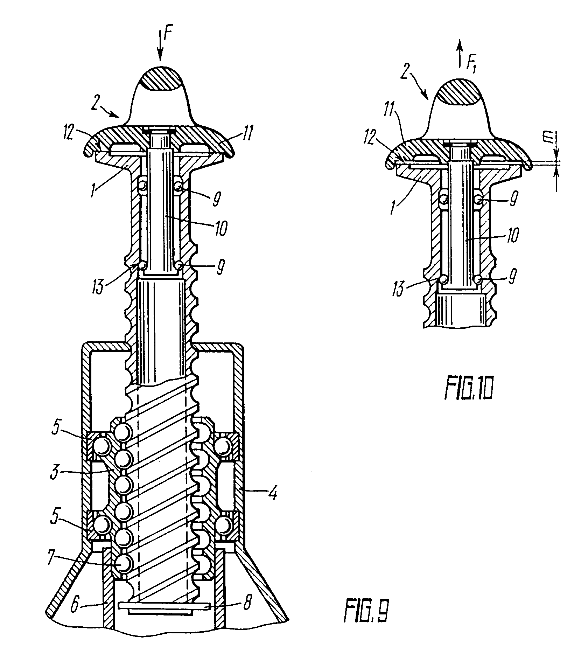

Referring to Figs 7 and 8, a continuous rotary motion of the driven link 3 can be originated by applying an axial force F simultaneously to two drive links 1 and 1' during their motions in appropriate directions. An interaction with an inertial mass can be neglected in contriving for continuous rotary motion of the driven link 3.

The magnitude of each axial force F or $F_1$ can be varied in a predetermined manner so as to enable the driven link 3 to revolve at a given speed and with a given torque.

The apparatus for transforming reciprocating motion into rotary motion is provided in the form of a screw mechanism devoid of self-braking ability. Low-friction sliding- and rolling-contact drives can be utilized. To obtain a high-speed and low-torque rotary motion of the driven link 3, it is practical to use rolling-contact screw drives which incorporate ball bearings and nuts with annular grooves. Their main disadvantage, inadequate kinematic accuracy, has no bearing on the performance of the apparatus. The light-weight housing of the nut can sustain high loads.

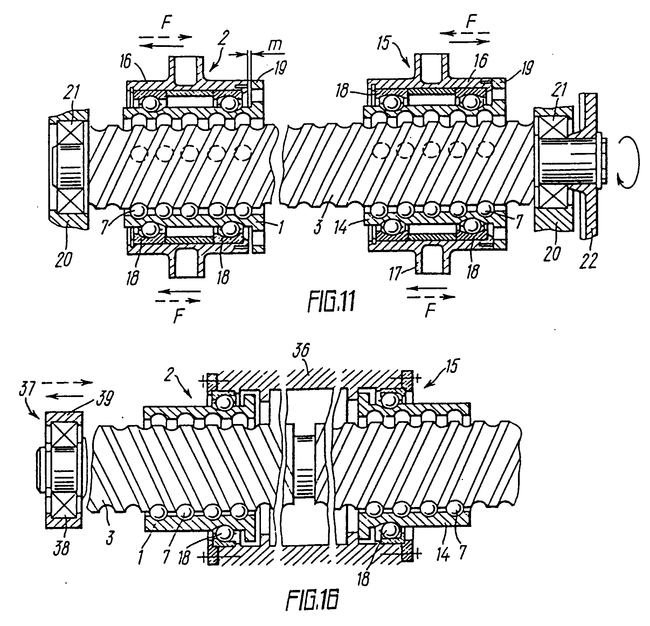

Referring to Fig. 9, the screw mechanism comprises a drive link 1, which is a screw, with an axial force-imposing unit 2 and a driven link 3 in the form of a nut supported in ball bearings 5 in a housing 4. The driven link 3 and the drive link 1 form a rolling-contact screw gear. The driven link 3 is directly connected to an inertial mass 6 and communicates with the drive link 1 by way of balls 7. The drive link 1 has a retainer 8. A rod 10 of the axial force-imposing unit 2 is connected to the drive link 1 through balls 9 and has a hand grip 11 at the top which is held fast thereto. A constraining surface 12 of the drive link 1 posessing high friction is in contact with the hand grip 11, and a sliding surface 13 of the drive link 1 contacts the balls 9. A distance of idle travel of the unit 2 before it contacts the drive link 1 being acted upon by an axial force F is denoted by "m" in Fig. 10.

To produce a continuous uniaxial rotary motion, the apparatus is provided with an additional drive link 14 (Fig. 11) and a self-contained axial force-imposing unit 15. Each of the units 2 and 15 has a trunnion 17 fitted to a housing 16 which provides connection to a drive (not shown) imparting reciprocating motion to the drive links 1 and 14 in reciprocally opposite directions along the driven link 3 with a full-length unidirectional thread. Each of the units 2 and 15 is provided with rolling-contact bearings 18 the grooves of the races whereof are axially oriented. The outer races are held fast to the housings 16 and the inner races function as the drive links 1 and 14. Each of the drive links 1 and 14 is provided with a prominence 19. The surfaces of the prominences 19 and those of the housings 16 of the units 2 and 15 which face each other are the constraining surfaces. The driven link 3 is supported in the housing 20 by bearings 21 and is connected to an actuator 22.

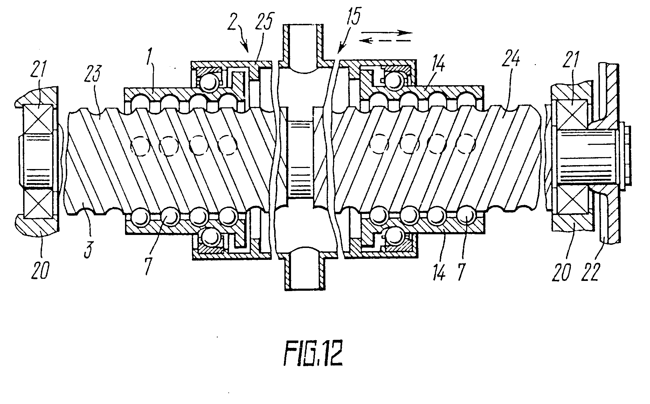

When the driven link 3 has two threads 23, 24 of different directions (Fig. 12), the units 2 and 15 are held fast to one another and are contained in a common housing 25.

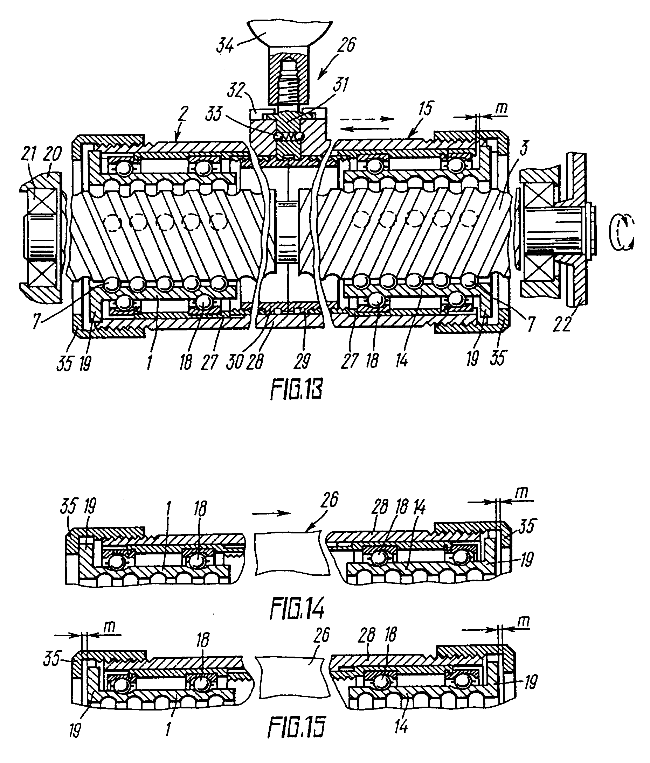

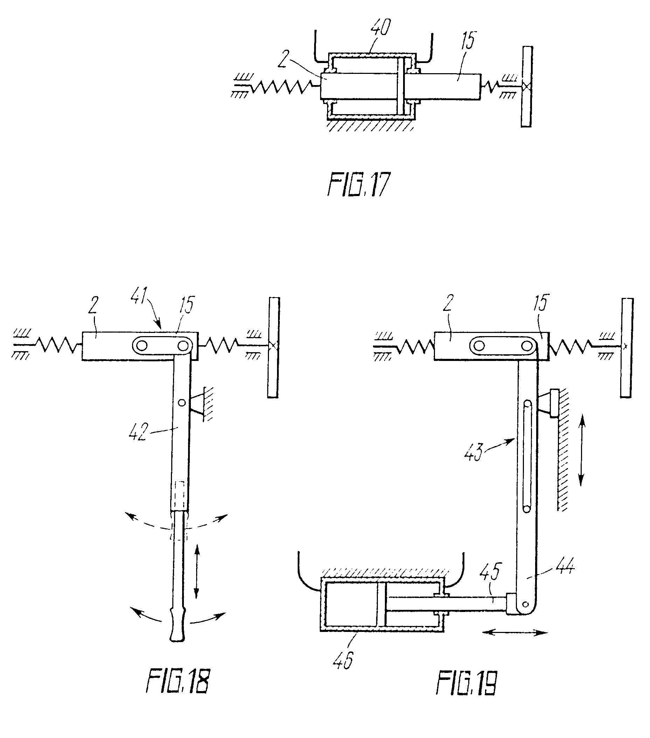

Referring to Fig. 13, the apparatus can be provided with a reversing means 26 incorporating collets 27 which fit into grooves of a housing 28, interact with the bearings 18 of the units 2 and 15 and are couplet with sleeves 29, 30. These are provided with threads of opposite directions and are fitted inside the housing 28. The reversing means 26 also incorporates a block 31 which interacts with the sleeves 29, 30, supportes in radial guides 32 with provision for revolving, and is fitted with a catch 33 and a control handle 34. Held fast to the housing 28 are also constraining members 35 (Figs 13, 14, 15). Their surfaces facing the appropriate surfaces of the prominences 19 of each drive link 1 and 14 are the constraining surfaces. They can rely for operation not only on friction. Axially extendable engaging means, end faces with inclined teeth and other arrangements can be used. In applications where a fixed reversing means 26 is required, it is expedient to hold fast the units 2 and 15 (Fig. 16) to a fixed member 36 and to provide the driven link 3 with an additional axial force-imposing unit 37 in the form of a bearing 38 contained in a housing 39.

The apparatus may incorporate an axial force-controlling means coupled with either the units 2, 15 (Figs 8 through 13) or the axial force-imposing unit 37 (Fig. 16). This means can be a controllable linear actuator 40 (Fig. 17) or an articulated leverage 41 (Fig. 18) with a gradually changing ratio of the arms of a lever 42. The axial force-controlling means can also be provided in the form of an articulated leverage 43 (Fig. 19) with a gradually changing ratio of the arms of a lever 44 which is hinged to a movable member, eg, the piston rod 45 of a linear actuator 46.

The apparatus for transforming reciprocating motion into unidirectional rotary motion operates in the following way.

The drive link 1 is constrained against rotary motion and imparted a downward translatory motion by applying an axial force F to the hand grip 11 (Fig. 11). The driven link 3, the nut connected to the inertial mass 6, starts revolving in the radial thrust bearings 5.

When the drive link 1 comes into its lowermost position, acting thereupon is a force $F_1$ (Fig. 10) of a reverse direction as the force F. The clearance "m" is formed between the constraining surfaces. Then, the force $F_1$ comes on the drive link 1 by way of the sliding surface 13 with a minimal rolling friction coefficient. The drive link 1 begins a helical motion about the driven link 3, the nut, being actuated therewith and revolving unidirectionally therewith. The rotary motion of the driven link is induced by inertia.

As the drive link 1 gains speed, the reactive torque thereof decreases but the speed can be multifold that of the driven link 3 when the drive link 1 is in its topmost position. When the force F is removed, the drive link 1 returns some of its kinetic energy to the driven link 3 due to their threaded joint incorporating the balls 7 functioning as an overrunning clutch. The energy transfer goes on until both links revolve at the same speed.

As soon as the drive link 1 revolves at the same speed with the driven link 3, the axial force F is again applied to the drive link 1, the screw, and the cycle is repeated until the driven link 3 attains a specified speed. When the force F of $F_1$ is removed at will by discontinuing to operate the hand grip 11, the driven link 3 continues its rotary motion due to inertia and the drive link 1 starts moving downward due to gravity and the effect of the driven link 3 so that the clearance "m" is formed between the constraining surfaces 12 (Fig. 10). The drive link 1 becomes involved into rotary motion integrally with the driven link 3.

A point to be noted is that the balls 7 (Fig. 9) always revolve in the same direction. This applied to the stages of the transformation of motion , the return of the drive link into the original position and the inertia-induced revolution of the driven link 3.

An apparatus with two drive links 1 and 14 (Fig. 11) and one driven link 3 which is a screw with a full-length unidirectional thread operates as follows.

The units 2 and 15 are acted upon at a time by two forces F and $F_1$ diverging from a centre. The force F exerted by the unit 15 is applied to the drive link 14 through the constraining surface 14 thereof, causing the drive link 1 to displace away from the centre. The force $F_1$ applied to the unit 2 brings about a rotary motion of the housing 16 thereof integrally with the races of the bearing 18 attached thereto at an early stage so that the clearance "m" is formed between the constraining surface of the unit 2 and that of the drive link 1. The balls of the bearing 18 contained in the axially oriented grooves of the races support the revolving housing 16. At this stage, the force $F_1$ becomes applied to the drive link 1 by way of the sliding surface thereof which is formed by the radial thrust bearing 18 so that the drive link 1 starts its helical motion about the revolving driven link 3. When the forces F and $F_1$ reverse their actions, the drive link 1 is constrained and begins its translatory motion along the driven link 3, causing this to revolve. At the same time, the drive link 14 is released and starts to accelerate in a helical motion about the revolving driven link 3, returning thus into the original position. The drive links 1 and 14 reciprocate in this way in mutually opposite directions so as to impart the driven link 3 a continuous unidirectional rotary motion at a specified speed.

Referring to Fig. 12, the driven link 3 can be provided with two lengths 23, 24 of thread with opposite directions, and the units 2 and 15 of the drive links 1 and 14 can be held fast to one another. This plan provides for using just one axial force F which displaces both drive links 1 and 14 in the same direction, whereby one of the links, eg that shown at 14, is constrained and performs its translatory motion and the other link, that shown at 1, is released and performs its helical motion. The units 2 and 15 can then be placed in a common housing 25, and the number of the bearings 18 which serve as sliding surfaces can be reduced to just two pieces. The outer races of the bearings 18 can be secured by analogy with the collets.

The constraining effect is obtained by using steel as the material of the constraining surfaces, provided their diameter and the helical angle have been chosen correctly. The driven link 3 is also made from steel. Functioning as the sliding surfaces are the rolling-contact bearings 7. Alternatively, the sliding surfaces can be provided in the form of magnetic pads, air cushions, hydraulic supports and the like.

To reverse the rotary motion of the driven link 3 (Fig. 13), use is made of the reversing means 26 which is arranged to hold fast the outer races of the bearings 18 of the units 2 and 15 in relation to the housing 28.

The reversing procedure is as follows. When the driven link 3 is immovable, the block 31 is turned in the radial guides 32 integrally with the sleeves 29, 30 which are splined to the block 31. The threaded sleeves 29, 30 act upon the collets 27, causing them to displace longitudinally in the grooves so as to act upon the outer races of the drive links 1 and 14 to which the collets 27 are held fast. The drive links 1 and 14 begin their helical motion. Heading for the appropriate constraining surfaces of the constraining members 35, they stop at the distance "m" short of them (Fig. 15). Now, when the housing 26 (Fig. 13) is set to reciprocate back and forth, the driven link 3 revolves in the reverse direction.

If the reversing procedure is initiated while the driven link 3 is revolving, the drive links 1 and 14 displace towards the constraining surfaces of the members 35 due to the action of the driven link 3 with the result that this links is being sharply braked.

Referring to Fig. 16, a helical motion of the driven link 3 can be obtained by applying the axial force to the driven link 3 directly. One of the oppositely travelling drive links, eg, that shown at 14, will be imparting rotary motion to the driven link 3, while the other drive link, that shown at 1, will be revolving in the course of relative motion due to interaction with the body 36 by way of the rolling-contact bearings 18. The driven link 3 will reciprocate back and forth and revolve unidirectionally at the same time. This kind of motion can be directly utilized in mechanisms or its rotary component only through the intermediary of over-running clutches. The driven link 3 can revolve due to inertia when the axial force ceases to act thereupon.

The parameters of the rotary motion of the driven link 3 lend themselves to control, as this may be frequently neede, by controlling the magnitude of the motive axial force. Serving this purpose is the axial force-controlling means several developments whereof are illustrated in Figs 17-19. When the linear actuator 40 (Fig. 17) is employed, the force control is exercised by changing the pressure of fluid therein. Likewise, the rotary speed of the driven link 3 is controlled by changing the flow rate of fluid. When use is made of the articulated leverage 41 (Fig. 18), the force control is exercised by gradually changing the ratio of the arms of the lever 42 which can be of the telescopic type. When the linear actuator 46 (Fig. 19) is a low-power one, it can be linked to the articulated leverage 43 to obtain extra mechanical advantage. The fulcrum pin of the lever 44 must be capable of gradually displacing and becoming fixed in any position.

The advantage of the disclosed invention are as follows.

1. Gives effect to the transformation of motion irrespectively of the spatial position of the driven link 3.

2. Permits controlling the length of reciprocating motions of the drive link 1 back and forth at any time, in any position and at any allowable speed thereof within the distance of a run.

3. Permits stepless control of the torque and rotary speed of the driven link 3.

4. Reverses the rotary motion of the driven link 3 in a simple way.

5. Automatically continues the rotary motion of the driven link 3 due to inertia after the action of axial forces has been discontinued without disengaging the drive.

6. Prevents rotary motion of the driven link 3 in the reverse direction after a stop.

7. Accelerates the driven link 3 to a speed exceeding that it has obtained due to the effect of the drive link 1.

8. Carries considerable impulses of force in transforming motion.

9. Transforms small linear displacements of the drive link 1 into a complete revolution of the driven link 3.

10. Increases the efficiency of transformation.

11. Widens the field of application of the method of, and the apparatus for, transforming reciprocating motion into unidirectional rotary motion.

Industrial Applicability

The invention can be utility in various branches of engineering, in automotive engineering and the power engineering industry before all.

**Claims**

1. A method of transforming reciprocating motion into unidirectional rotary motion which relies for operation on a screw mechanism devoid of self-braking ability and consists of constraining rotary motion of a drive link (1) of the screw mechanism in an original position, displacing the drive link (1) along the axis of the screw mechanism in an original position, displacing the drive link (1) along the axis of the screw mechanism through the distance of a run so as to transform the translatory motion thereof into a rotary motion of a driven link (3), returning the drive link (1) into the original position by displacing it in relation to the driven link (3), repeating the cycle until the rotary motion acquires specified parameters and releasing the drive link (1), **characterized** in that the drive link (1) is simultaneously constrained and displaced by the same axial force and is then simultaneously released and positively returned into the original position, while being imparted a helical motion about the revolving driven link 3 by a force opposing the axial one and chosen so that the reactive moment of inertia of the drive link (1) is less than the static and dynamic moments of inertia of the driven link (3) when the drive link (1) is revolving about the revolving driven link (3), coupled to an inertial mass (6), at a speed exceeding that of the rotary motion of the driven link (3).

2. A method of transforming reciprocating motion into unidirectional rotary motion which relies for operation on a screw mechanism devoid of self-braking ability and consists of constraining rotary motion of the drive link (1) of the screw mechanism in the original position, displacing the drive link (1) along the axis of the screw mechanism through the distance of a run so as to transform the translatory motion thereof into the rotary motion of the driven link (3), returning the drive link (1) into the original position by displacing it in relation to the driven link (3), repeating the cycle until the rotary motion acquires specified parameters and releasing the drive link (1), **characterized** in that the main drive link (1) is alternately constrained and discpaced simultaneously with releasing and positively returning into an original position an additional drive link (1'), which is being imparted a helical motion about the revolving driven link (3), due to the action of an axial force and the main drive link (1) is released and positively returned into the original position, while being imparted a helical motion about the revolving driven link (3), simultaneously with constraining and displacing the additional drive link (1') due to the action of another axial force of a reverse direction, whereby both drive links (1', 1) displace along the same driven link (3).

3. A method of transforming reciprocating motion into unidirectional rotary motion which relies for operation on a screw mechanism devoid of self-braking ability and consists of constraining rotary motion of the drive link (1) of the screw mechanism in the original position, displacing the drive link (1) along the axis of the screw mechanism through the distance of a run so as to transform the translatory motion thereof into the rotary motion of the driven link (3), returning the drive link (1) into the original position by displacing it in relation to the driven link (3), repeating the cycle until the rotary motion acquires specified parameters and releasing the drive link (1), **characterized** in that the main drive link (1) is alternately constrained and displaced by two axial forces and simultaneously the additional drive link (1') is released and positively returned into the original position, while being imparted helical motion about the revolving driven link (3), and the main drive link (1) is released and positively returned into the original position, while being imparted helical motion about the revolving driven link (3), simultaneously with constraining and displacing the additional drive link (1'), whereby both drive links (1', 1) displace along the same driven link (3).

4. A method of transforming reciprocating motion into unidirectional rotary motion as in claim 3, **characterized** in that the axial forces $(F, F_1)$ are of the same magnitude and opposite directions.

5. A method of transforming reciprocating motion into unidirectional rotary motion as in claim 3, **characterized** in that the axial forces $(F, F_1)$

are of the same magnitude and direction.

6. A method of transforming reciprocating motion into unidirectional rotary motion as in claim 3, **characterized** in that the axial forces (F, F$_1$) are different both in magnitude and direction.

7. A method of transforming reciprocating motion into unidirectional rotary motion as in claims 1 through 6, wherein the magnitude of each axial force (F, F$_1$) is changed in a predetermined manner.

8. An apparatus for transforming reciprocating motion into unidirectional rotary motion provided in the form of a screw mechanism which is contained in a housing, is devoid of self-braking ability and comprises a drive link (1) with an axial force-imposing unit (2) and a driven link (3) fitted with provision for revolving about its axis, **characterized** in that the drive link (1) is coupled to the drive-actuated axial force-imposing unit (2) with provision for unobstructed axial displacement, unobstructed revolving and constraining so as to interact therewith by way of its two surfaces (12, 13), a constraining surface (12) and a sliding surface (13), contacting corresponding identical surfaces of the axial force-imposing unit (2), and the driven link (3) is coupled to the housing (4) and an inertial mass (6).

9. An apparatus for transforming reciprocating motion into unidirectional rotary motion provided in the form of a screw mechanism which is contained in a housing, is devoid of self-braking ability and comprises a drive link (1) with an axial force-imposing unit (2) and a driven link (3) fitted with provision for revolving about its axis, **characterized** in that there is incorporated at least one additonal drive link (14) with a self-contained axial force-imposing unit (15), whereby the axial force-imposing units (2, 15) of the drive links (1, 14) are connected to a drive owing whereto the drive links (1, 14) diverge along the driven link (3) with a unidirectional full-length thread and each drive link (1, 14) is coupled to its axial force-imposing unit (2,15) with provision for unobstructed axial displacement, unobstructed revolving and constraining so as to interact therewith by way of its two surfaces, a constraining surface and a sliding surface, contacting corresponding identical surfaces of the axial force-imposing units (2, 15).

10. An apparatus for transforming reciprocating motion into unidirectional rotary motion provided in the form of a screw mechanism which is contained in a housing, is devoid of self-braking ability and comprises a drive link (1) with an axial force-imposing unit (2) and a driven link (3) fitted with provision for revolving about its axis, **characterized** in that there is incorporated at least one additional drive link (14) with a self-contained axial force-imposing unit (15) held fast to the axial force-imposing unit (2) of the main drive link (1), whereby the driven link (3) is provided with at least two lengths (23, 24) of threads of opposite directions enabling the drive links (1, 14) to travel in the same direction, and each drive link (1, 14) is coupled to its axial force-imposing unit (2, 15) with provision for unobstructed axial displacement, unobstructed revolving and constraining so as to interact therewith by way of its surfaces, a constraining surface and a sliding surface, contacting corresponding identical surfaces of the axial force-imposing units (2, 15).

11. An apparatus as in claim 8 through 10, **characterized** in that each axial force-imposing unit (2, 15) incorporates bearings (18) which form the sliding surfaces thereof and provide connection with the appropriate drive link (1, 14) functioning as a race of each bearing (18), the grooves of this race being axially oriented.

12. An apparatus as in claims 9 and 10, **characterized** in that there is incorporated a reversing means (26) coupled to the bearings (18) of the axial force-imposing units (2, 15), and held fast to each drive link (1, 14) is a member (19) with at least two mutually opposing constraining surfaces and at least two mutually opposing sliding surfaces which interact with corresponding surfaces of the axial force-imposing units (2, 15).

13. An apparatus as in claims 11 and 12, **characterized** in that the constraining surfaces have a high friction.

14. An apparatus as in claim 10, **characterized** in that the axial force-imposing units (2, 15) of the drive links (1, 14) are held fast to a fixed member (36), and the driven link (3) is provided with an additional axial force-imposing unit (37) facilitating unobstructed revolving thereof.

15. An apparatus as in claims 8 through 10, **characterized** in that there is incorporated an axial force-controlling means coupled with the axial force-imposing units (2, 15) of the drive links (1, 14).

16. An apparatus as in claim 14, **characterized** in that there is incorporated an axial force-controlling means coupled with the additional axial force-imposing unit (37) of the driven link (3).

17. An apparatus as in claims 15 and 16, **characterized** in that the axial force-controlling means is provided in the form of an articulated leverage (41) with a gradually changing ratio of the arms of a lever (42).

18. An apparatus as in claims 15 and 16, **characterized** in that the axial force-controlling means is provided in the form of a controllable linear actuator (40).

19. An apparatus as in claims 15 and 16, **characterized** in that the axial force-controlling means is provided in the form an articulated leverage (43) with a gradually changing ratio of the arms of a lever (44) coupled with the movable member (45) of a linear actuator (46).

FIG.1

FIG.2

FIG.3

FIG.4

EP 0 549 790 A1

FIG.5

FIG.6

FIG.7

FIG.8

15

FIG.10

FIG.9

FIG.11

FIG.16

FIG.12

FIG.13

FIG.14

FIG.15

FIG.17

FIG.18

FIG.19

## INTERNATIONAL SEARCH REPORT

International Application No  PCT/SU 90/00280

| I. CLASSIFICATION OF SUBJECT MATTER (if several classification symbols apply, indicate all) * |
|---|
| According to International Patent Classification (IPC) or to both National Classification and IPC |

IPC⁵      F16H 25/20

| II. FIELDS SEARCHED |
|---|

### Minimum Documentation Searched 7

| Classification System | Classification Symbols |
|---|---|
| $IPC^5$ | F16H 25/20, US Cl. 74-89.15, 74-424.8 |

Documentation Searched other than Minimum Documentation
to the Extent that such Documents are Included in the Fields Searched *

| III. DOCUMENTS CONSIDERED TO BE RELEVANT * | | |
|---|---|---|
| Category * | Citation of Document, 11 with indication, where appropriate, of the relevant passages 12 | Relevant to Claim No. 13 |
| A | SU,AI,364294 (R.G. Sabashvili et al.), 20 February 1973 (20.02.73) | 1 |
| A | US,A,3803926         (cited in the description) | 1 |
| A | I.I. Artobolevsky "Mekhanizmy v sovremennoi tekhnike", 1971, tom 2, Nauka, (Moscow), page 988, fig. 2.276 | 1 |

* Special categories of cited documents: 10

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art.

"&" document member of the same patent family

| IV. CERTIFICATION | |
|---|---|
| Date of the Actual Completion of the International Search | Date of Mailing of this International Search Report |
| 20 August 1991      (20.08.91) | 22 August 1991      (22.08.91) |
| International Searching Authority | Signature of Authorized Officer |
| ISA/SU | |

Form PCT/ISA/210 (second sheet) (January 1985)